# EUROPEAN PATENT APPLICATION

(11) **EP 2 071 486 A1**
(43) Date of publication of application: **17.06.2009**
(21) Application number: 07122962.9
(22) Date of filing: 12.12.2007
(51) Int. Cl.: G06F 21/20

(54) **Method and arrangement for managing sensitive personal data**

(71) Applicant: MeDier Oy, 02201 Espoo (FI)
(72) Inventor: Korhonen, Markku, 02170, Espoo (FI); Korhonen, Maija, 02170, Espoo (FI)
(74) Representative: Brax, Matti Juhani

(57) **Abstract**

In a method for managing sensitive personal data to be used for running an application on a protected system at least part of said sensitive personal data is stored in a portable trusted device. After this the portable trusted device is polled in the vicinity of the protected system and a wireless communication connection is established between the protected system and portable trusted device, whereupon said sensitive personal data is communicated from the portable trusted device to the protected system, and used to launch the running of the application on the system or used to authenticate the user of the application or the protected system.

## Description

### TECHNICAL FIELD OF THE INVENTION

The invention relates to a method and arrangement for managing sensitive personal data to be used for running an application on a protected system and identificating or authenticating of a user of an application or the protected system.

### BACKGROUND OF THE INVENTION

The usage of personal mobile devices, such as laptop computers, PDAs, smart phones and mobile phones, has grown dramatically during recent years and this growth just seems to accelerate in the future. Therefore, more and more confidential data is stored on these devices, which are often carried with and used outside the organization, which in turn means that the confidential data they carry is also taken outside of the organization. Due to various reasons, in most cases the confidential data is stored in a totally unprotected or insufficiently protected manner. Hence, there have been more and more cases in the publicity in which devices holding sensitive data have been lost or stolen. The actual value of the lost or stolen data varies much, but at worst the value is priceless, not to mention the harm caused to the organizations' credibility and public image. Thus, there is a growing need to protect the data residing on these devices from falling into wrong hands.

These negative scenarios can be avoided by protecting the data with sufficient measures. The most effective method is to encrypt the data so that unauthorized parties cannot read it should the device get lost or stolen. Encryption is based on two factors:
- Encryption algorithm, by which the plain-text data is encrypted or "scrambled" so that it becomes unreadable
- Encryption keys, which are used by the encryption algorithm to encrypt and decrypt the data

In the case of symmetric encryption only one key has to be stored securely, whereas asymmetric encryption calls for at least two keys: one for encryption and the other for decryption. Asymmetric encryption is fundamentally more secure than symmetric encryption, but it is also more difficult to implement technically. On the other hand, symmetric encryption implementations typically run many times more rapidly than asymmetric encryption. Therefore, practical implementations often use symmetric algorithms to encrypt the data itself and use asymmetric encryption to encrypt the keys only. This method provides sufficient level of security without the encryption and decryption operations degrading the devices general performance too much.

Especially for PCs, there are many widely known commercial software products by which the confidential data on the device can be efficiently protected. This solution does not focus on encryption software solutions themselves, but on the management, physical usage and storage of the encryption and decryption keys, or other sensitive personal data to be used for communicating with a protected system.

The current encryption solutions store the keys used by them mainly with following methods:
- On the device memory directly, on hard-disk, flash memory etc.
- On an external memory device which has to be physically attached to the device when used, typically a USB memory stick or a smart card.

When observed from the perspective of data security, these methods do, however, present essential weaknesses. If the encryption and decryption keys are stored directly on the device memory the data is weakly protected, since one only has to know or crack the user's password or PIN to fully remove the protection of the data.

USB memory sticks are increasingly popular and they are manufactured in very large quantities. The problem with USB memory sticks is that they have to be physically inserted into/attached to the device prior to their usage. The worst fact, however, is that the majority of the end-users store and carry them in the same case with their laptop computer. This means that, when an unauthorized party gets hold of the case he/she also gets access to encryption and decryption keys. This in turn means, there is no data protection in practice. In the case of smart phones, PDA devices and mobile phones USB memory sticks are also very unpractical to use, since they have to be attached to the small device. They stick out from the small device, are clumsy to use and break easily when the device is in use. Thus, in practice USB memory sticks cannot be used with these devices.

Solutions based on smart cards have also the drawback that they have to be physically attached to the device with an external smart card reader and because of this fact in practice they cannot be used in conjunction with mobile devices.

The practice has shown that if a solution is unpleasant or difficult to use, it will not be used or a way to bypass its usage is found. Therefore, data security also has to be easy to use and preferably ubiquitous to the end-user.

A secure solution is such in which the encryption and decryption keys are always physically separated from the device so that the encryption and decryption keys are securely and separately stored apart from the device. With this arrangement losing the device alone would not be problematic, since in practice without the encryption and/or decryption keys it would be impossible to access the data on the device. The same applies to the keys, since if they are lost they are unusable without the device and data that they are applied to.

### SUMMARY OF THE INVENTION

The object of the invention is to alleviate drawbacks related to the known prior art solutions described above. In addition the object of the invention is to introduce a solution for managing sensitive personal data to be used for running an application on a protected system so that the security is maximized and for secure identification or authentication of a user of an application or the protected system and at the same time actions required from the user are minimal.

The objects of the invention are fulfilled by a method of claim 1, and an arrangement of claim 7, as well as by a portable device of claims 13.

A method according to the invention is characterized by the characterizing portion of the method claim 1. An arrangement according to the invention is characterized by the characterizing portion of the claim 7. In addition, a portable trusted device according to the invention is characterized by the characterizing portion of the claim 13.

Further advantages of the invention are disclosed in the dependent claims.

The following terms are used in this document in the following meaning:
- "Protected system" is a system which usage is restricted and access is permitted only to trusted users. Protected system may be e.g. mobile devices, such as laptop computers, PDAs, smart phones and mobile phones, payment terminals, cash machines or automated teller machines (ATM). The protected system may be divided in an embodiment to a sub-system and to another system(s) being in data communication with each other.
- "Sensitive personal data" may be sensitive data related to a person, organization or status, user of a device, system, service, computer and/or internet application. It may be encryption and/or decryption keys needed for data encryption and/or decryption operations, user-ID, permanent, temporary or one-time passwords, passphrases, passcodes, access codes or numbers in order to grant or deny access to a system, physical location, device, service, computer and/or internet application, service or data.
- "Trusted device" is advantageously a portable memory-device, which is provided with sensitive personal data and communicates with the protected system via wireless communication connection. The logic residing on the protected device is solely responsible for actions taken based on the data provided by the trusted device or on the identity of the trusted device itself. The idea is that it is trusted that the trusted device and the data it carries is reliable and hence trusted.

According to an advantageous embodiment of the invention sensitive personal data, which is needed for running -or at least to launch the running of- an application on a protected system, is managed, where said sensitive personal data is typically provided on a portable trusted device. Said sensitive personal data may be for example user's encryption and/or decryption key. The protected system may be for example computer which data storage's data is encrypted and only the user having corresponding decryption key can decrypt said encryption.

Now, when the user having the portable trusted device comprising said sensitive personal data appears on the vicinity of the protected system, the portable trusted device is advantageously polled and a wireless communication connection between the protected system and portable trusted device is established, if the trusted device is kept as a trusted device for said protected device. According to an embodiment the user does not need to write his/her decryption key, but at least part of said sensitive personal data (decryption key in this example) is automatically communicated from the portable trusted device to the protected system. If the communicated sensitive personal data is correct and corresponds to the encryption key, said application is run on the protected system, i.e. decryption software is run on the computer of the example, where at least part of said decryption key (said sensitive personal data) is used for decrypting said encrypted data.

According to an advantage embodiment of the invention said wireless communication connection is adapted between the portable trusted device and the protected system by using a short range radio communication connection or Near Field Communication, such as Bluetooth or Ultra Low Power Bluetooth, such as Wibree. Using e.g. Wibree the power consumption of the trusted device can be kept very minimal. This embodiment has an advantage that no visible connection is needed and the portable trusted device comprising at least part of said sensitive personal data can be hidden in the vicinity of the user, when said portable trusted device is very difficult to steal, for example. According to another embodiment of the invention said communication connection can be implemented optically, such as using Infra-Red rays.

According to an additional embodiment of the invention said portable trusted device can be polled and at least part of said sensitive personal data be communicated from the portable trusted device to the protected system within certain intervals in order to keep said application on running. This embodiment has an advantage that if or when the user leaves the protected system and takes the trusted device with his/her, the protected system determines this and e.g. closes the application or computer or access to the system automatically.

Said sensitive personal data depends on the application to be run and can be for example a digital key, such as encryption and decryption key needed for data encryption and/or decryption operations. Said data may also be a digital certificate or other digital equivalent of an ID card used in conjunction with a public key encryption system for example. Said sensitive personal data may also be a PIN code, such as PIN code used typically with cash machines, payment terminals or mobile phones, but in may also be a digital signature to be attached into a document, for example. In addition said sensitive personal data may be a social security number, member number / ID, register number / ID, passphrase, passcode, password, bank account number, credit card number and/or related PIN or access code or number, or other data equate with the sensitive personal data mentioned above.

Said sensitive personal data can be used to identify, authenticate and/or authorize a person, user or other physical or legal entity, in order to grant or deny right to vote in an election, electrically sign, accept, ratify, verify, copy, proof, cancel, delete or deny contracts, agreements, messages, orders and/or other legal or financial transactions or documents, commit an order of goods and/or services, purchase goods and/or services, and initiate financial transaction, such as payment, bank transfer, cash withdrawal, deposit etc, for example.

According to an embodiment the protected system may also be in addition to a personal computer a personal digital assistant device, smart-phone, mobile phone, cash machine, payment terminal or automated teller machine, for example. However, the protected system may also be other electrical device that contains, processes or stores data. According to an embodiment said protected system is in connection with said trusted device via a wireless connection, which may be implemented for example by Bluetooth or Wibree connection. In addition, according to an exemplary embodiment the wireless communication link and the data transferred may also be protected using a suitable encryption, like but not limited to PKI, AES, DES, etc.

According to an embodiment the application to be run on the system may also be in addition to an application for encrypting and/or decrypting data a digital signing application, or application for granting or denying an access to a system, physical location, device, service, cash machine, automated teller machine, computer and/or internet application, internet service or internet data.

According to an embodiment the trusted device is a portable trusted device having storage means for storing sensitive personal data, data transmission means for transmitting at least sensitive personal data to a protected system, as well as means for establishing a communication connection between said protected system and trusted device. In addition, according to an embodiment, said trusted device may comprise a power source.

The present invention offers a secure solution with remarkable advantages over the known prior art, namely the trusted device is very easy to carry and use. In addition encryption and decryption keys are always physically separated from a protected system so that the encryption and decryption keys are securely and separately stored apart from the protected system. With this arrangement losing the trusted device alone would not be problematic, since in practice without the encryption and/or decryption keys it would be impossible to access the data on the device.

The trusted device can be physically so small that it can be attached to a key-ring like traditional latchkeys, and it actually can be implemented in a form of a key chain, badge, implant, or ornament or ring, for example. The usage of the trusted device does not require any separate actions from the end-user, it does not have to be exposed during its usage and it can be stored in a pocket or wallet, for example. People have used and carried traditional keys for a long time and learned to take good care of them. The present invention takes benefit of this habit and turns it into more secure computing.

The present invention also securely stores its user's user IDs and passwords. Nowadays a common issue for users is that different IT devices, applications and other protected systems have their own separate user IDs and passwords. Remembering them all by heart has become a real problem, why many users write them down on pieces of paper or they are stored directly on the device used. According to the invention, more complicated and therefore more secure user IDs and passwords can be used in such a way that the users do not have to remember them by heart. This leads to more powerful way and habit of protecting the data residing on user's mobile devices in a ubiquitous and user-friendly way which in turn encourages its usage.

### BRIEF DESCRIPTION OF THE DRAWINGS

Next the invention will be described in greater detail with reference to exemplary embodiments in accordance with the accompanying drawings, in which
Figure 1 illustrates a flow chart of an exemplary method for managing sensitive personal data to be used for running an application on a protected system according to an advantageous embodiment of the invention,
Figure 2 illustrates an exemplary arrangement for managing sensitive personal data to be used for running an application on a protected system according to an advantageous embodiment of the invention,
Figure 3 illustrates an exemplary trusted device according to an advantageous embodiment of the invention.

### DETAILED DESCRIPTION

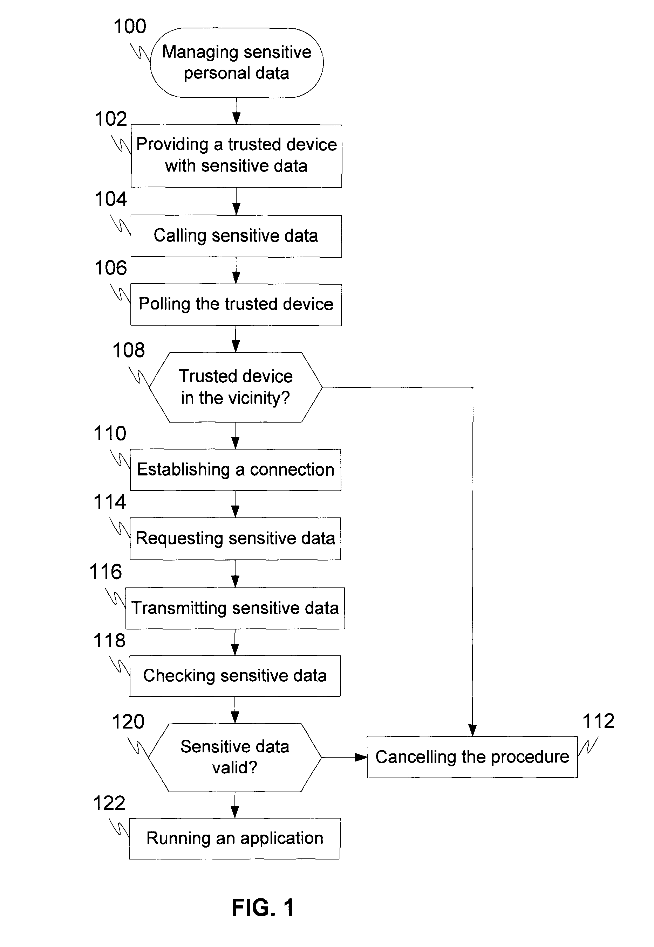

Figure 1 illustrates a flow chart of an exemplary method 100 for managing sensitive personal data to be used for running an application on a protected system in data decryption according to an advantageous embodiment of the invention, where at step 102 a trusted device is provided with at least part of said sensitive personal data, such as a decryption key. Now, when there is a need to decrypt data on the protected system, such as a computer, the decryption key is called in step 104 for example by an encryption system used on the protected system in order to load the operation system or to decrypt encrypted volumes, folders or files.

In step 106 a wireless communication link and polling operation is activated in order to poll any trusted device in the vicinity of the protected system. If a trusted device is present and active (step 108), a wireless communication connection is established in step 110 between the protected system and trusted device and request for the decryption key is sent in step 114. The wireless communication connection may be protected by an encryption method. If any active trusted device is not polled in the vicinity of the protected system (step 108), the decryption process in cancelled without decrypting any encrypted information in step 112.

The decryption key is transmitted to the protected system via the established communication connection in step 116, after which the validity of the decryption key is checked in step 118. If the decryption key is valid (step 120), the decryption is proceeded in step 122 based on the rules and logic of the encryption system. If the decryption key is not provided or if it is invalid, the proceedings are based on the rules and logic of the encryption system, such as cancelling (112) the decryption process without decrypting any encrypted information.

It should be noted that according to an embodiment of the invention the decryption key is not stored on the static device memory of the protected system at any time.

The encryption of the data works with the same principle, but in that case the encryption key is passed to the protected system. If the encryption system on the protected system is purely based on symmetric encryption only one single key is passed and the same key is used for encryption and decryption.

In addition according to an embodiment of the invention the method 100 can be applied to an access process to a protected system, where the accession is valid (and kept alive) as far as the trusted device is in the vicinity of the protected system. In this embodiment the method steps are very similar to method 100, but said trusted device is polled and at least part of said sensitive personal data is communicated from the trusted device to the protected system within certain intervals in order to keep said application on running. Thus in this additional embodiment e.g in connection with step 122 lapse of said certain time interval is checked and lapsing said interval steps 104-122 are performed again (to the appropriate extent). Now, if the user has left and the trusted device is not anymore in the vicinity of the protected system (step 108), the running of the application is cancelled in step 112.

Furthermore, according to an embodiment of the invention the method 100 (with or without applying the certain time interval described above) can be applied to an access to a cash machine so that in addition to steps illustrated in Figure 1 the PIN code is required e.g. in connection with step 118. In this embodiment the sensitive personal data is advantageously the account number of the user stored in the trusted device.

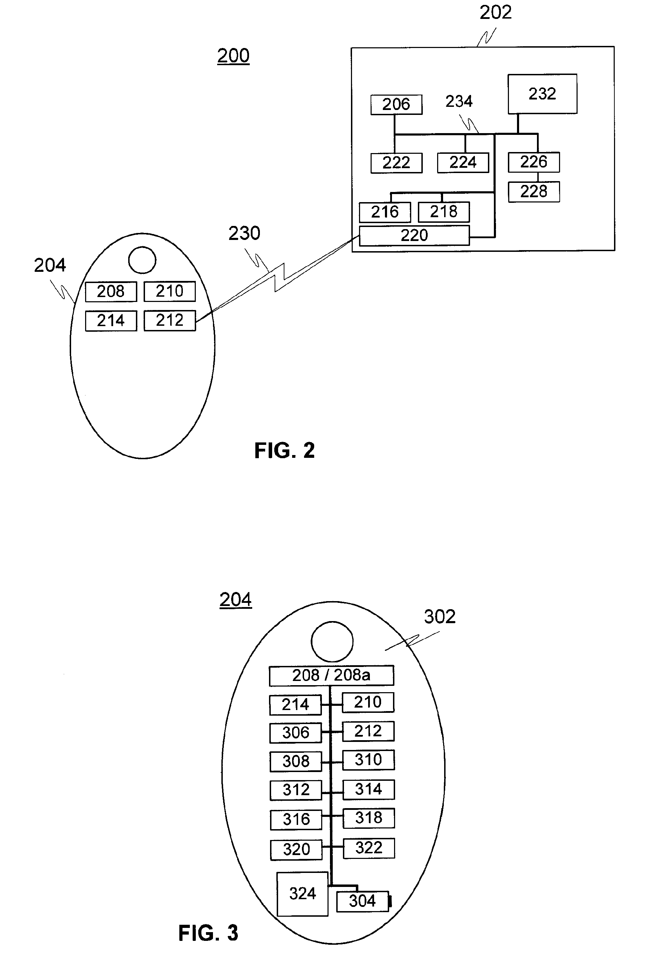

Figure 2 illustrates an exemplary arrangement 200 for managing sensitive personal data to be used for running an application on a protected system according to an advantageous embodiment of the invention, where the system comprises at least said protected system 202 and a trusted device 204, and said protected system 202 comprises said application 206.

According to an embodiment of the invention the trusted device 204 comprises means 208 for storing said sensitive personal data, means 210 for allowing to be polled in the vicinity of third parties by said third parties, such as by the protected system, means 212 for establishing a wireless communication connection 230 between said protected system and portable trusted device, and means 214 for communicating at least part of said sensitive personal data from the portable trusted device 204 to the protected system 202 via said established wireless communication connection 230 in order to launch the running of said application 206 on the protected system 202.

According to an embodiment of the invention the protected system 202 comprises advantageously means 216 for activating a wireless communication link and means 218 for polling the trusted device 204 in the vicinity of the protected system 202, means 220 for establishing a wireless communication connection 230 between said protected system 202 and trusted device 204, means 222 for calling said sensitive personal data from said trusted device, means 224 for receiving at least part of said sensitive personal data from the trusted device 204 to the protected system 202 via said wireless communication connection 230, and means 226 for using at least partly said sensitive personal data to launch the running of said application 206 on the protected system.

In addition the protected system 202 may comprise means 228 for cancelling the running of the application if any active trusted device is not polled in the vicinity of the protected system or said sensitive personal data was not valid.

It should be noted that the protected system 202 may be for example a personal computer, personal digital assistant device, smart-phone, mobile phone, cash machine or automated teller machine. In addition the application 206 to be run on the protected system 202 may be an application for encrypting and/or decrypting data, digital signing, or granting or denying an access to a system, physical location, device, service, cash machine, automated teller machine, computer and/or internet application, service or data.

According to an embodiment said wireless communication connection 230 is implemented by radio communication connection, such as via Bluetooth or Wibree. However, according to another embodiment said wireless communication connection is implemented optically, such as using Infra-Red connection.

In addition, according to an embodiment of the invention, the means 218 for polling may be adapted to poll said trusted device (and possibly also the means 222-226) within certain intervals in order to keep said application on running.

The protected system advantageously comprises also a data processing means 232 and data communication bus 234 via which the components 206, 216-228 of system are connected to each other and via which the data processing means 232 controls the operations of means 206, 216-228.

Moreover, said communication connection may be protected by an encryption method and/or methods, like PKI, AES, DES etc. Further it can be implemented in an embodiment by audio (voice) connection using e.g. audio pulses, waves and/or signals. Means for establishing said communication connection may comprise a (proprietary) external physical adapter or interface to the host device (such as protected system), like a USB adapter/dongle, comprise an external adapter or interface to an physical access control system, comprise a (proprietary) external software adapter application, like an interface to an operating system, (like Microsoft Windows XP, Microsoft Windows Vista, Symbian, Linux, Apple OS etc.), an interface to an encryption application, (like Microsoft BitKeeper, CheckPoint PointSec), an interface to an authorization application, an interface to an access control application, or an interface to other service process, computer and/or internet application.

Figure 3 illustrates an exemplary trusted device 204 according to an advantageous embodiment of the invention, where said trusted device 204 comprises means 208-214 already described in connection with Figure 2. The trusted device 204 is advantageously a portable trusted device implemented in a form of a key chain, such as illustrated in Figure 3. According to an embodiment of the invention said trusted device comprises a housing 302, which may be made of plastic, composite material, metal or glass, for example. In addition said trusted device may comprise also a power supply 304, such as a battery, solar-cell and/or induction-coil.

Furthermore said trusted device 204 may comprise also a programmable logic 306 for local data processing operations, keypad or other button-based input device 308 for inputting data, such as sensitive personal data, to memory storage means 208. Said memory means 208 may be according to an embodiment a removable and/or expandable local memory 208a for additional or removable data storage.

In addition said trusted device 204 may comprise possible touch-screen 310 for data input and output and/or user identification, display 312 for output data, finger-print reader 314 for user identification, microphone 316 for user identification or guidance, information input or for data communication purposes, loudspeaker 318 for data communication purposes, information output or system alarms or notifications or user guidance, and LED 320 or other lights of different colours for user guidance and/or system alarms or notifications.

The trusted device 204 may also comprise means 322 for protecting data on the memory means by an encryption method and/or method, like PKI, AES, DES etc., user-id, password, PIN or other code and/or their combination, and/or finger-print reader.

The trusted device advantageously comprises also a data processing means 324 and data communication bus 326 via which the components 208/208a-214, and 306-322 of the trusted device are connected to each other and via which the data processing means 324 controls the operations of means 208/208a-214, and 306-322 in an appropriate way.

The invention has been explained above with reference to the aforementioned embodiments, and several advantages of the invention have been demonstrated. It is clear that the invention is not only restricted to these embodiments, but comprises all possible embodiments within the spirit and scope of the inventive thought and the following patent claims. Especially it should be noted that the protected system may comprise also further protected system so that the first protected system communicates with the trusted device and runs some sub-application and as a consequence of this another application (even an actual application) is run on the further protected system separated from the first protected system.

## Claims

1. A method for managing sensitive personal data to be used for running an application on a protected system, the method comprising:
- providing a portable trusted device with at least part of said sensitive personal data,
- polling said portable trusted device comprising at least part of said sensitive data in the vicinity of said protected system,
- establishing a wireless communication connection between said protected system and portable trusted device, where the wireless communication connection is protected by an encryption method,
- communicating at least part of said sensitive personal data from the portable trusted device to the protected system, and
- using at least partly said sensitive personal data to launch the running of said application on the system or vice versa.

2. A method of claim 1, wherein said sensitive personal data is at least one of the following: digital key, such as encryption and decryption key needed for data encryption and/or decryption operations, digital certificate, PIN code, digital signature, social security number, member number / ID, register number / ID, password, passphrase, passcode, bank account number, credit card number and/or related PIN or access code or number.

3. A method of claim 1, wherein said protected system is at least one of the following: personal computer, personal digital assistant device, smart-phone, mobile phone, cash machine, payment terminal or automated teller machine.

4. A method of claim 1, wherein said application to be run on the system is at least one of the following: application for encrypting and/or decrypting data, digital signing, or granting or denying an access to a system, physical location, device, service, cash machine, automated teller machine, computer and/or internet application, service or data.

5. A method of claim 1, wherein said wireless communication connection is established by at least one of the following communication connection: radio connection, short range radio communication connection, near field communication connection, optical connection, infrared transfer, Bluetooth or Ultra Low Power Bluetooth.

6. A method of any of claims 1-5, wherein said portable trusted device is polled and at least part of said sensitive personal data is communicated from the portable trusted device to the protected system within certain intervals in order to keep said application on running.

7. Arrangement for managing sensitive personal data to be used for running an application on a protected system, the arrangement comprising in addition to the protected system:
- a portable trusted device arranged to be provided with at least part of said sensitive personal data,
- means for polling said portable trusted device comprising at least part of said sensitive data in the vicinity of said protected system,
- means for establishing a wireless communication connection between said protected system and portable trusted device, where the wireless communication connection is protected by an encryption method,
- means for communicating at least part of said sensitive personal data from the portable trusted device to the protected system,
- means for using at least partly said sensitive personal data to launch the running of said application on the system or vice versa.

8. An arrangement of claim 7, wherein said sensitive personal data is at least one of the following: digital key, such as encryption and decryption key needed for data encryption and/or decryption operations, digital certificate, PIN code, digital signature, social security number, member number / ID, register number / ID, password, passphrase, passcode, bank account number, credit card number and/or related PIN or access code or number.

9. An arrangement of claim 7, wherein said protected system is at least one of the following: personal computer, personal digital assistant device, smart-phone, mobile phone, cash machine, payment terminal or automated teller machine.

10. An arrangement of claim 7, wherein said application to be run on the system is at least one of the following: application for encrypting and/or decrypting data, digital signing, or granting or denying an access to a system, physical location, device, service, cash machine, payment terminal, automated teller machine, computer and/or internet application, service or data.

11. An arrangement of claim 7, wherein said wireless communication connection is established by at least one of the following communication connection: radio connection, short range radio communication connection, near field communication connection, optical connection, infrared transfer, Bluetooth or Ultra Low Power Bluetooth.

12. An arrangement of any of claims 7-11, wherein the arrangement is adapted to poll said portable trusted device and communicate at least part of said sensitive personal data from the portable trusted device to the protected system within certain intervals in order to keep said application on running.

13. A portable trusted device used for managing sensitive personal data to be used for running an application on a protected system, the portable trusted device:
- is adapted to being provided with at least part of said sensitive personal data,
- is adapted to being polled in the vicinity of said protected system when comprising at least part of said sensitive data,
- comprises means for establishing a wireless communication connection between said protected system and portable trusted device, where the wireless communication connection is protected by an encryption method, and
- comprises means for communicating at least part of said sensitive personal data from the portable trusted device to the protected system in order to launch the running of said application on the system, or vice versa.

14. A portable trusted device of claim 13, wherein said sensitive personal data is at least one of the following: digital key, such as encryption and decryption key needed for data encryption and/or decryption operations, digital certificate, PIN code, digital signature, social security number, member number / ID, register number / ID, password, passphrase, passcode, bank account number, credit card number and/or related PIN or access code or number.

15. A portable trusted device of claim 13, wherein said protected system is at least one of the following: personal computer, personal digital assistant device, smart-phone, mobile phone, cash machine, payment terminal or automated teller machine.

16. A portable trusted device of claim 13, wherein said application to be run on the system is at least one of the following: application for encrypting and/or decrypting data, digital signing, or granting or denying an access to a system, physical location, device, service, cash machine, automated teller machine, computer and/or internet application, service or data.

17. A portable trusted device of claim 13, wherein said wireless communication connection is established by at least one of the following communication connection: radio connection, short range radio communication connection, near field communication connection, optical connection, infrared transfer, Bluetooth or Ultra Low Power Bluetooth.

18. A portable trusted device of any of claims 13-17, wherein said portable trusted device is adapted to being polled and at least part of said sensitive personal data adapted to being communicated from the portable trusted device to the protected system within certain intervals in order to keep said application on running.

19. A portable trusted device of any of claims 13-18, wherein said portable trusted device is in the form of a key chain.
